# FASCICULE DE BREVET EUROPEEN

(11) **EP 3 470 575 B1**
(45) Date de publication et mention de la délivrance du brevet: **06.03.2024**
(21) Numéro de dépôt: 18199847.7
(22) Date de dépôt: 11.10.2018
(51) Int. Cl.: E01B 19/00, E01B 21/00

(54) **JOINT D'ÉTANCHÉITÉ POUR VOIE FERRÉE**
DICHTUNGSFUGE FÜR EISENBAHNSCHIENE
SEAL FOR RAILWAY

(30) Priorité: 13.10.2017 FR 1759610
(43) Date de publication de la demande: 17.04.2019
(73) Titulaire: ALSTOM Holdings, 93400 Saint-Ouen-sur-Seine (FR)
(72) Inventeur: PAUCHET, Frederic, 92600 ASNIERES SUR SEINE (FR); MEDINA-PINEDA, David, 92600 ASNIERES SUR SEINE (FR); DUBOUCHET, Jean-Yves, 59233 MAING (FR); OSMANI, Samir, 59240 DUNKERQUE (FR)
(74) Mandataire: Lavoix

(56) Documents cités:
- EP-A2- 2 088 240
- DE-A1-102013 011 451
- DE-U1- 8 424 521
- FR-A1- 2 869 628
- FR-A1- 2 947 285
- FR-A1- 3 051 200
- NL-A- 8 503 531

## Description

La présente invention concerne les joints d'étanchéité entre un rail et la paroi d'une rainure prévue dans la chaussée pour recevoir la tête de ce rail.

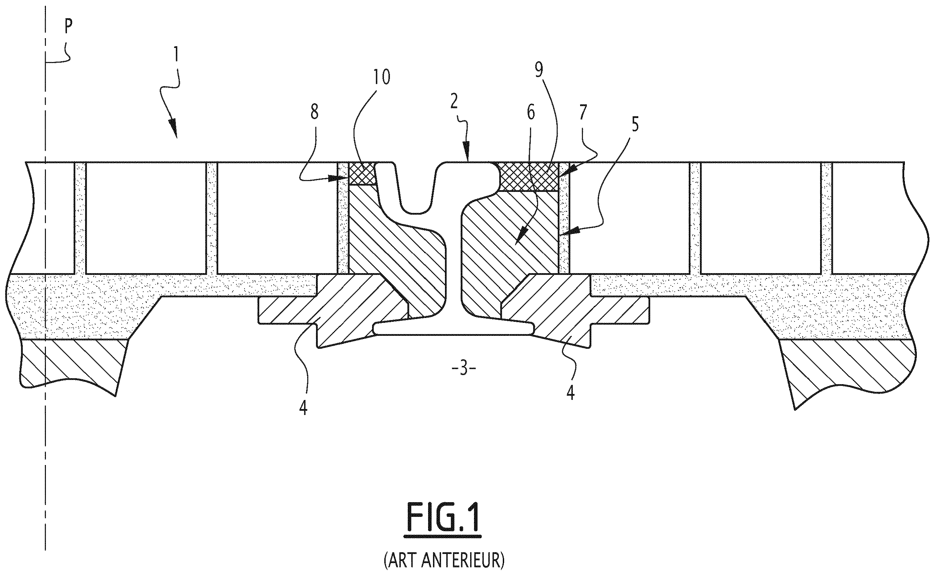

Comme illustré sur la figure 1, dans le cas par exemple d'une voie ferrée pour la circulation de tramways, le rail 2 est implanté de manière à être affleurant à la surface du sol 1. Le rail 2 est fixé, par un système d'agrafes 4 adapté, sur une traverse 3 (ou une dalle) enterrée, de préférence en béton. La tranchée d'implantation de la voie ferrée est remblayée pour reconstituer le sol 1, la couche superficielle du sol étant par exemple constituée d'un pavement.

Pour le cas d'une voie dite noyée, le sol 1 est reconstitué de manière à ménager une rainure 5, à l'intérieur de laquelle se situe le rail 2, la rainure délimitant une chambre de part et d'autre du rail 2. Un matériau adapté, tel qu'un élastomère, par exemple un polyéthylène basse densité, est coulé dans la chambre pour encapsuler le rail 2.

Pour le cas d'une voie plus traditionnelle, est approvisionné sur le chantier un rail dont la base est déjà encapsulée dans une chambre d'éclissage en élastomère. Une fois cet ensemble fixé sur la traverse 3, le sol est reconstitué.

Cette encapsulation 6 du rail 2 a pour fonction d'isoler électriquement le rail du sol pour éviter les courants vagabonds. Elle a également pour fonction d'absorber les vibrations mécaniques au passage des tramways.

Cette encapsulation 6 présente une surface supérieure en retrait de la surface du sol 1, de sorte que deux logements 7 et 8 sont ménagés de part et d'autre de la partie supérieure du rail 2, aussi dénommée champignon ou tête de rail.

Pour éviter l'infiltration d'eau de pluie dans la chambre 5, des joints d'étanchéité 9 et 10 sont coulés, in situ, dans chacun des deux logements 7 et 8.

Actuellement, pour réaliser les joints d'étanchéité 9 et 10, il est prévu de préparer chaque logement 7 et 8, notamment par application d'un primaire d'adhésion sur le rail 2. Puis un second matériau élastomère, typiquement du polyuréthane (par exemple bicomposant), ou un bitume, est coulé dans chaque logement 7 et 8 sur une épaisseur permettant de rattraper le niveau de la surface du sol 1. Le matériau vient remplir le logement 7 ou 8 et adhérer à la face latérale du rail 2, à la surface supérieure de l'encapsulation 6, et à la paroi latérale de la rainure 5.

Cependant, la réalisation d'un tel joint d'étanchéité nécessite des équipements lourds.

De plus, des opérations complexes, consistant à mélanger des produits chimiques dans des quantités déterminées pour préparer le second matériau de manière à ce qu'il présente des propriétés adaptées pour qu'il puisse être coulé puis durcir dans un temps acceptable, ont lieu sur le chantier. Ces produits chimiques sont toxiques pour la santé des opérateurs. Toute erreur dans les quantités mélangées ou dans les conditions environnementales de réalisation du joint (notamment de température ou l'absence de pluie) a pour conséquence l'obtention d'un joint de qualité médiocre, présentant notamment une durée de vie réduite.

Si un défaut d'étanchéité dans une longueur de joint n'est pas détecté à temps, l'eau de pluie est susceptible de s'infiltrer et de venir corroder le rail ou son système de fixation sur la traverse ou altérer le sol support de l'infrastructure, posant à terme des problèmes de sécurité et de fiabilité. L'eau infiltrée vient également dégrader le matériau polymère de l'encapsulation, qui est sensible à l'action de l'eau.

Enfin, si le joint d'étanchéité est localement totalement enlevé, l'action mécanique des pneumatiques des véhicules partageant la chaussée avec le tramway dégrade rapidement l'encapsulation du rail.

Les opérations de maintenance d'une longueur dégradée du joint d'étanchéité consistent à remplacer intégralement cette longueur de joint. Les coûts de dépose et de pose d'une nouvelle longueur de joint sont conséquents.

Enfin, il a été constaté qu'un tel joint d'étanchéité, même s'il est correctement posé, présente une durée de vie bien inférieure à celle initialement escomptée. Pour une voie ferrée devant rester en service au moins 30 ans, des dégradations significatives apparaissent au bout de 5 ans et le joint doit être remplacé au bout de 10 ans au maximum.

Par ailleurs, DE8424521A1 divulgue des joints d'étanchéité placés de part et d'autre d'un rail, chacun des joints d'étanchéité étant un profilé de section en forme de coin et possédant un canal permettant la déformation transversale.

DE10201311451A1 décrit un joint de remplissage élastomère permettant de combler l'intervalle entre le rail et la paroi d'un logement de manière à éviter que la roue d'un vélo ne soit prise dans la rainure.

FR2569628A1 divulgue des joints d'étanchéité insérés dans une rainure entre un rail et la paroi du logement de réception du rail.

Le but de la présente invention est donc de résoudre ces problèmes.

Pour cela l'invention a pour objet un joint d'étanchéité pour voie ferrée et une voie ferrée selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 est une section d'une voie ferrée intégrée dans le sol, au niveau d'une des files de rails, selon l'état de la technique ;
- La figure 2 est une section similaire à celle de la figure 1, mais dans laquelle deux joints d'étanchéité sont mis en oeuvre ;
- la figure 3 est une section d'une première variante d'un joint d'étanchéité ne relavant pas de l'invention ;
- la figure 4 est une section d'une seconde variante d'un joint d'étanchéité ne relevant pas de l'invention ;
- la figure 5 illustre un mode de réalisation du joint d'étanchéité selon l'invention ; et,
- la figure 6 est une section d'un autre mode de réalisation d'un joint d'étanchéité qui ne relève pas de l'invention.

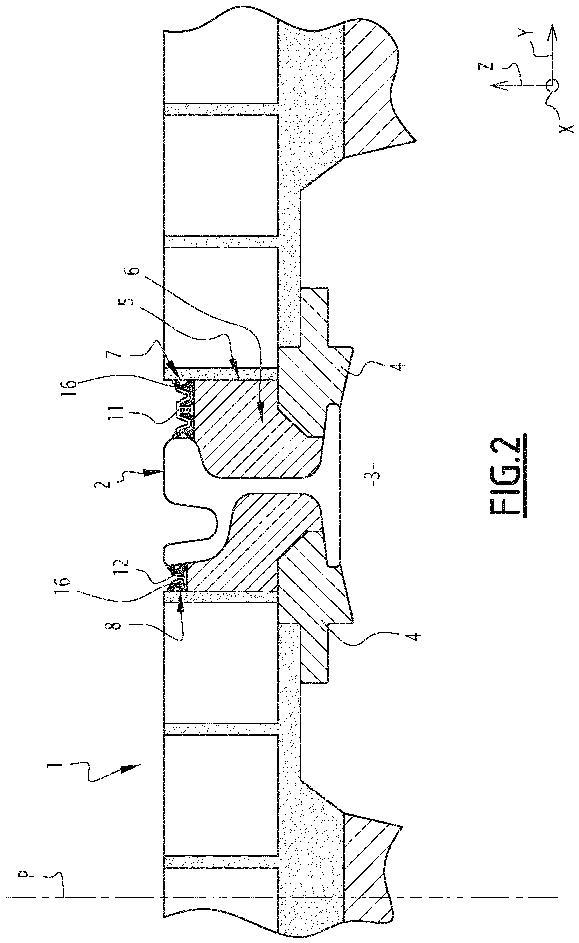

La figure 2 représente la moitié d'une voie ferrée, celle-ci étant symétrique par rapport à un plan P médian. La voie ferrée met en oeuvre un ou plusieurs joints d'étanchéité selon l'invention.

La figure 2 est ainsi identique à la figure 1 à l'exception du fait que les deux joints d'étanchéité 9 et 10 coulés selon l'état de la technique sont ici remplacés par deux joints d'étanchéité 11 et 12 rapportés et fixés par collage au moyen d'un mastic 16 adapté, dans chacun des logements 7 et 8, de part et d'autre de la portion de la tête du rail 2 émergeant de l'encapsulation 6.

Chaque joint, 11, 12, est déformable transversalement de manière élastique, pour pouvoir être descendu sous contrainte dans le logement correspondant puis, après avoir été relâché, pour être appliqué contre la face latérale du rail 2 et la paroi latérale de la rainure 5.

Sur la figure 2, le rail 2 étant asymétrique, le premier logement 7, situé sur le côté extérieur de la voie ferrée, présente une première largeur de l'ordre de 50 mm, tandis que le second logement 8, situé sur le côté intérieur de la voie ferrée, présente une seconde largeur de l'ordre de 20 mm.

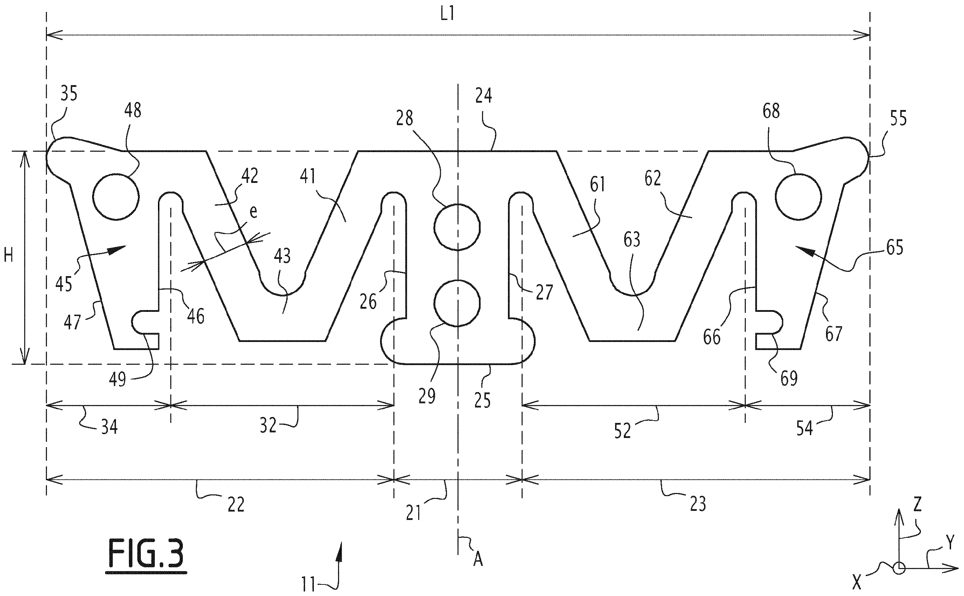

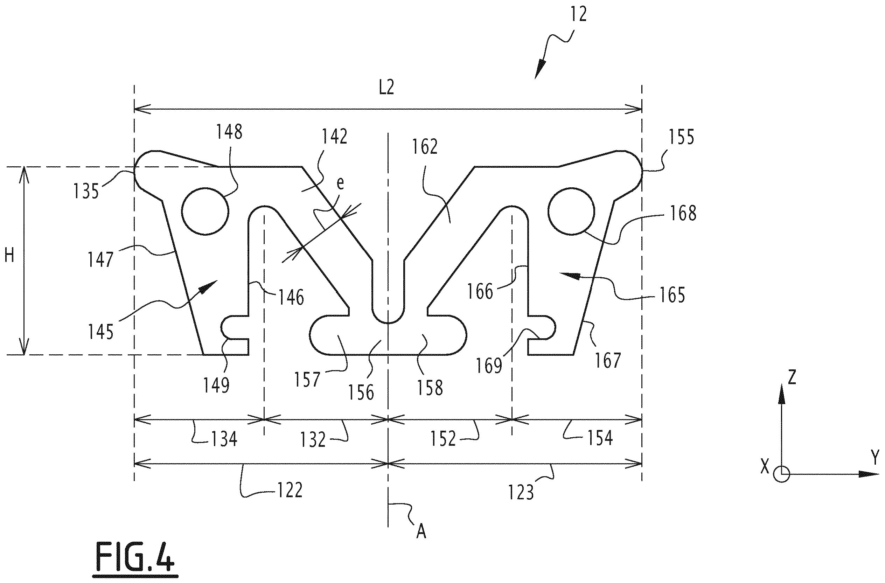

Est ainsi placé dans le premier logement 7, un premier joint d'étanchéité 11, correspondant à une première variante d'un premier mode de réalisation du joint d'étanchéité selon l'invention et représenté plus en détail à la figure 3 ; et, dans le second logement 8, un second joint d'étanchéité 12, correspondant à une seconde variante du premier mode de réalisation du joint d'étanchéité selon l'invention et représenté plus en détail à la figure 4.

En se référant maintenant à la figure 3, le joint d'étanchéité 11 est réalisé en un matériau polymère présentant une certaine rigidité. Par exemple un caoutchouc synthétique est utilisé.

Le joint d'étanchéité 11 est un profilé selon une direction longitudinale X.

La section transversale de ce profilé, c'est-à-dire la section du joint 11 dans un plan YZ perpendiculaire à la direction longitudinale X, est représentée sur la figure 3.

Lorsque le joint 11 équipe la voie ferrée, l'axe X est destiné à coïncider avec l'axe longitudinal du rail 2, l'axe Z avec la normale à la surface du sol 1, et l'axe Y avec une direction transversale de la voie ferrée.

La section transversale est inscrite dans un rectangle de largeur L1 et de hauteur H. Elle est symétrique par rapport à un plan longitudinal médian A, parallèle au plan ZX.

Le joint 11 comporte une âme centrale 21 et des ailes latérales gauche 22 et droite 23, de part et d'autre de l'âme centrale 21.

L'âme centrale 21 présente une face supérieure 24 et une face inférieure 25, ainsi qu'une face latérale gauche 26 et une face latérale droite 27. Les faces de l'âme centrale 21 sont sensiblement planes.

La face supérieure 24 est lisse ou rainurée.

Les bases des faces latérales 26 et 27 sont renflées de manière à former des ancrages pour favoriser l'adhérence du joint 11 au mastic de fixation utilisé pour coller le joint 11 dans le logement 7.

La hauteur de l'âme centrale 21 détermine la hauteur H du joint. La surface inférieure 25 est propre à venir en appui de la surface de l'encapsulation 6 formant le fond du logement 7. Les autres portions du joint sont en retrait selon la direction Z par rapport à la surface inférieure 25.

Avantageusement, l'âme centrale 21 comporte des évidements longitudinaux 28 et 29 pour économiser le matériau constitutif du joint 11 et maintenir l'épaisseur locale du joint 11 au-dessous d'une valeur seuil, afin de limiter les effets de rétractation du matériau et donc de déformation du joint 11 lors de sa fabrication. Par un système de tenon - mortaise, ils permettent la jonction de deux longueurs de joints successives.

L'aile gauche 22 comporte une portion intermédiaire 32 connectée à l'âme centrale 21 et une portion d'extrémité 34, connectée à la portion intermédiaire 32.

La portion intermédiaire 32 présente une forme en accordéon comportant au moins un motif en « V » ou pli. Dans le mode de réalisation présenté sur la figure 3, la portion intermédiaire 32 comporte un unique motif en « V » constitué d'une première paroi 41 à angle et d'une seconde paroi 42 à angle, connectées entre elles par une arête 43.

L'extrémité de la première paroi 41 opposée à l'arête 43, est connectée au bord supérieur de la face latérale gauche 26 de l'âme centrale 21.

L'extrémité de la seconde paroi 42, opposée à l'arête 43, est connectée à la portion d'extrémité 34.

L'épaisseur de l'arête 43 et, de préférence, celle de la première paroi 41 à l'endroit où elle est connectée à l'âme centrale 21 et celle de la seconde paroi 42 à l'endroit où elle est connectée à la portion d'extrémité 34, est réduite par rapport à l'épaisseur e des première et seconde parois 41 et 42.

Le fait d'affiner les extrémités des parois 41 et 42 permet de déformer élastiquement la portion intermédiaire 32. Cet effet d'« accordéon » permet de modifier élastiquement la largeur du joint 11, en modifiant l'angle entre les première et seconde parois 41 et 42.

La hauteur de la portion intermédiaire 32, c'est-à-dire du motif en « V », est dans l'état non déformé du joint 11 inférieure à la hauteur H, de manière à ce que, dans l'état de déformation maximale du joint 11, les première et seconde parois étant alors pratiquement l'une contre l'autre, la hauteur de la portion intermédiaire 32 soit égale ou reste inférieure à la hauteur H, qui est adaptée à la hauteur du logement devant recevoir le joint.

La concavité des motifs en « V », orientée vers le haut, peut être rayonnée pour faciliter le nettoyage et l'écoulement de l'eau de pluie vers une conduite d'évacuation latérale.

La portion d'extrémité 34 comporte une paroi tombée 45 présentant une face latérale intérieure 46, orientée vers l'âme centrale 21, et une face latérale extérieure 47, orientée à l'écart de l'âme 21.

Le bord supérieur de la paroi latérale intérieure 46 est connecté à la seconde paroi 42 de la portion intermédiaire 32.

L'extrémité latérale 35 du joint 11 correspond au bord supérieur de la paroi latérale extérieure 47, qui est renflé de manière à faire saillie latéralement par rapport à la face latérale extérieure 47.

Avantageusement, l'extrémité latérale 35 présente, dans le plan transversal YZ, un contour en arc de cercle. Ainsi, le contact entre le joint 11 et le rail 2 ou la paroi de la rainure 5 est un contact sensiblement ponctuel, mais mobile le long de ce contour en fonction de l'état local de déformation du joint 11. Le contact joint - rail ou joint - paroi de la rainure présente de ce fait une bonne qualité propre à assurer l'étanchéité et la pérennité du joint.

La paroi tombée 45 comporte avantageusement un évidement longitudinal 48 pour économiser le matériau constitutif du joint 11 et maintenir l'épaisseur locale du joint 11 en dessous d'une valeur seuil pour limiter les effets de rétractation du matériau et donc de déformation du joint lors de sa fabrication. Il permet également de rabouter deux longueurs successives du joint.

Avantageusement, la paroi tombée 45 comporte, par exemple sur la face latérale intérieure 46, une gorge 49 permettant de constituer une réserve de mastic pour une meilleure fixation du joint.

Une description similaire pourrait être faite de l'aile droite 23 du joint 11, qui comporte une portion intermédiaire 52, constituée d'une première paroi 61 à angle, d'une seconde paroi 62 à angle, connectées entre elles par une arête 63 pour forme un motif en « V » ; et une portion d'extrémité 54, dont la paroi tombée 65 comporte une paroi intérieure 66, une paroi extérieure 67 et un évidement longitudinal 68. Le bord inférieur de la paroi intérieure 66 est muni d'une gorge 69. Le bord supérieur de la paroi extérieure 67 est renflé de manière à ce que le joint présente une extrémité latérale 55 faisant saillie latéralement par rapport à la paroi 67. L'extrémité latérale 55 présente avantageusement un contour en arc de cercle.

A la figure 4, le second joint 12 présente une largeur L2 réduite par rapport à celle L1 du premier joint 11 afin d'être reçu dans le second logement 8.

De manière simple, la section transversale du second joint 12 peut être vue comme correspondant à celle du premier joint 11 de laquelle aurait été retirées l'âme centrale 21 et les premières parois 41 et 61 des ailes droite 22 et gauche 23, de manière à connecter directement les secondes parois 42 et 62 des ailes droite 22 et gauche 23 le long d'un arête médiane.

Plus précisément, en se référant à la figure 4, le second joint 12 présente ainsi une section transversale symétrique par rapport à un plan longitudinal médian A, parallèle au plan ZX.

Le joint 12 comporte des ailes latérales gauche 122 et droite 123 de part et d'autre du plan médian A.

L'aile gauche 122 comporte une portion intermédiaire 132 connectée directement à l'aile droite 123 et une portion d'extrémité 134, connectée à la portion intermédiaire 132.

La portion intermédiaire 152 comporte une première paroi 142 à angle.

L'aile droite 123 comporte une portion intermédiaire 152 connectée directement à l'aile gauche 122 et une portion d'extrémité 154, connectée à la portion intermédiaire 152.

La portion intermédiaire 132 comporte une seconde paroi 162 à angle.

La première paroi 142 est connectée à la seconde paroi 162 le long d'une arête 156.

L'extrémité de la paroi 142 opposée à l'arête 156 est connectée à la portion d'extrémité 134 et l'extrémité de la paroi 162 opposée à l'arête 156 est connectée à la portion d'extrémité 154.

Avantageusement, l'épaisseur de l'arête 156, et, de préférence, celle de la paroi 142 à l'endroit où elle est connectée à la portion d'extrémité 134, et celle de la paroi 162 à l'endroit où elle est connectée à la portion d'extrémité 154, est réduite par rapport notamment à l'épaisseur e des parois 142 et 162 pour autoriser la déformation élastique selon la direction transversale du joint.

En effet, en affinant localement l'épaisseur des extrémités des parois 142 et 162 permet d'obtenir une déformation élastique du motif en « V » que forme ces deux parois. Cet effet d'« accordéon » permet de modifier la largeur L2 du joint 12.

L'arête 156 est avantageusement renflée transversalement pour présenter des saillies latérales 157 et 158 propres à assurer un ancrage du joint 12 dans le mastic de fixation. Elle permet également d'augmenter la surface de contact entre le joint et l'encapsulation 6

La portion d'extrémité 134 comporte une paroi tombée 145 présentant une face intérieure 146 et une face extérieure 147.

Le bord supérieur de la face intérieure 146 est connecté à la paroi 142.

L'extrémité latérale 135 du joint 12 correspond au bord supérieur de la face extérieure 147, qui est renflé de manière à faire saillie latéralement au-delà de la face extérieure 147.

La paroi tombée 145 comporte avantageusement un évidement longitudinal 148.

La face intérieure 146 de la paroi tombée 145 comporte avantageusement une gorge 149 d'ancrage.

Dans cette variante, la paroi tombée 145 descend sensiblement au même niveau horizontal que la face inférieure de l'âme centrale de manière à offrir un appui supplémentaire du joint sur l'encapsulation 6.

De manière symétrique, la portion d'extrémité 154 comporte une paroi tombée 165 présentant une face intérieure 166 et une face extérieure 167.

Le bord supérieur de la face intérieure 166 est connecté à la paroi 162.

L'extrémité latérale 155 du joint 12 correspond au bord supérieur de la face extérieure 167, qui est renflé de manière à faire saillie latéralement par rapport à la face extérieure 167.

La paroi tombée 165 comporte avantageusement un évidement longitudinal 168.

La face intérieure 166 de la paroi tombée 165 comporte avantageusement une gorge 169.

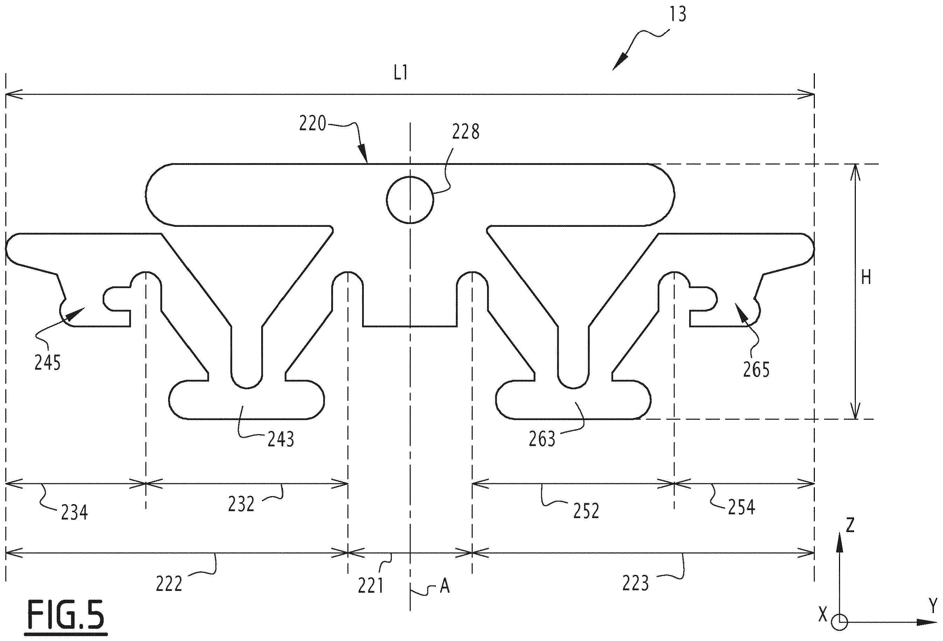

Le joint d'étanchéité 13 de la figure 5 constitue le seul des modes de réalisation illustrés qui soit conforme à l'invention revendiquée.

De préférence, dans une première variante, l'âme centrale 221 présente une hauteur réduite par rapport à celle du joint 11 de la figure 3. Ce sont les arêtes 243 et 263 des portions intermédiaires 232 et 252 des ailes droite 222 et gauche 223 qui sont renflées transversalement de manière à présenter des saillies et une face inférieure élargie pour coopérer efficacement avec le mastic de fixation et la surface de l'encapsulation 6.

Les parois tombées 245 et 265 des portions d'extrémité 234 et 254 des ailes droite 222 et gauche 254 peuvent alors présenter une hauteur réduite par rapport à celle du joint 11.

Dans cette variante de réalisation, il n'y a plus d'endroit où l'épaisseur du matériau est supérieure à l'épaisseur seuil. Il n'est donc plus nécessaire de prévoir des évidements dans les portions d'extrémité.

Le joint d'étanchéité 13 comporte une potion supérieure 220 raccordée à la face supérieure de l'âme 221 et s'étendant transversalement de manière à former une paroi recouvrant les motifs en « V » des portions intermédiaires 232 et 252. De la sorte, la concavité des motifs en « V », ouverte vers le haut, est ici close, sans pour autant limiter la déformation transversale du joint. La portion supérieure présente une extension transversale correspondant au plus à la largeur minimale du joint 13, soit sa largeur dans l'état de déformation maximale.

La surface supérieure du joint est ainsi plus plate facilitant le contact avec les pneumatiques des véhicules roulant sur la voie ferrée.

Un évidement longitudinal 228 est éventuellement à prévoir dans l'âme centrale 221.

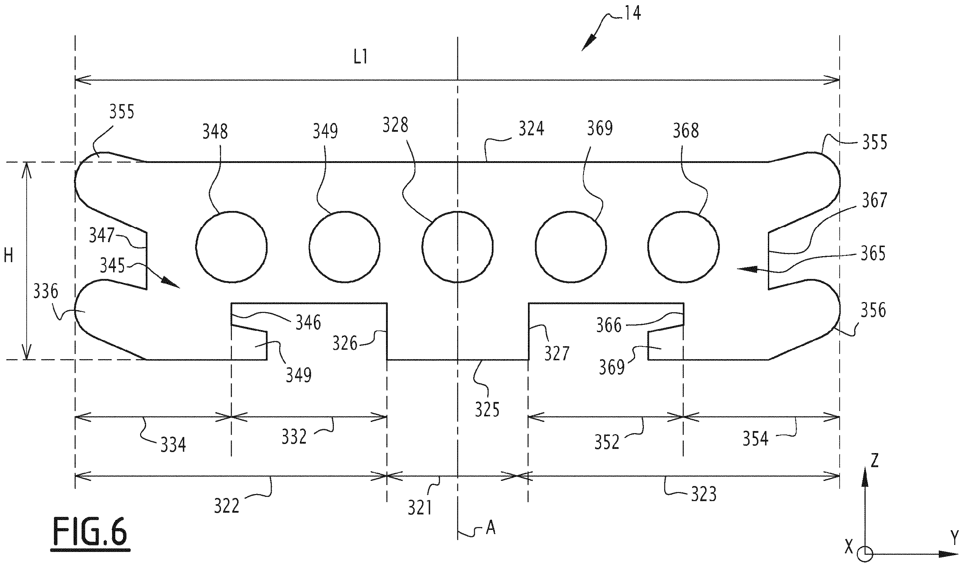

Un autre mode de réalisation du joint d'étanchéité, qui ne relève pas de l'invention, va maintenant être décrit. Il s'agit d'un profilé dont la section est représentée à la figure 6.

La section du joint 14 est inscrite dans un rectangle de largeur L1 et de hauteur H. il est donc destiné à être reçu dans le logement 7. Un joint adapté au logement 8 peut facilement se déduire de la présentation du joint 14.

Le joint 14 est symétrique par rapport à un axe médian A. Il comporte une portion centrale 321 et des ailes latérales gauche 322 et droite 323 de part et d'autre de la portion centrale.

La portion centrale présente des faces inférieure 325 et supérieure 324 et des face latérales gauche 326 et droite 327. Elle comporte un orifice central 328.

L'aile gauche 322 comporte une portion intermédiaire 332 connectée à la portion centrale 321 et une portion d'extrémité 334, connectée à la portion intermédiaire 332.

La portion intermédiaire 332 est ici sensiblement rectangulaire. Elle présente un orifice central 349.

La portion d'extrémité 334 comporte une paroi tombée 345, dont une face latérale intérieure 346 porte, du côté de son bord inférieur, une saillie 349 d'ancrage dans le mastic de collage, et dont une face latérale extérieure 347 comporte, du côté de son bord supérieur, une lèvre supérieure 335 et, du côté de son bord inférieur, une lèvre inférieure 336. Les lèvres 335 et 336 forment l'extrémité latérale gauche du joint 14. La portion d'extrémité 334 comporte également un orifice 348.

De manière symétrique, l'aile droite 323 comporte une portion intermédiaire 352 connectée à la portion centrale 321 et une portion d'extrémité 354, connectée à la portion intermédiaire 352.

La portion intermédiaire 352 est rectangulaire. Elle présente un orifice central 369.

La portion d'extrémité 354 comporte une paroi tombée 365, dont une face latérale intérieure 366 porte, du côté de son bord inférieure, une saillie 369 d'ancrage dans le mastic de collage, et dont une face latérale extérieure 367 comporte, du côté de son bord supérieur, une lèvre supérieure 355 et, du côté de son bord inférieur, une lèvre inférieure 356. Les lèvres 355 et 356 forment l'extrémité latérale droite du joint 14. La portion d'extrémité 354 comporte également un orifice 368.

Dans cet autre mode de réalisation, la déformation du joint pour en adapter la largeur est obtenue essentiellement au niveau des lèvres 335, 336, 355 et 356 des extrémités droite et gauche du joint, par déformation selon la direction de la hauteur du joint. Le joint selon le second mode de réalisation est plutôt adapté pour être inséré à force dans son logement de réception.

Avantageusement, les lèvres sont inclinées de manière à former un angle avec l'axe A qui soit légèrement inférieur à un angle droit, pour faciliter leur déformation vers le haut lorsque le joint est descendu dans son logement de réception et que l'extrémité libre de chaque lèvre frotte contre la paroi du rail ou celle de la rainure.

Avantageusement, chaque lèvre présente un contour en arc de cercle dans le plan transversal à la direction longitudinale du joint.

Le procédé d'installation d'un joint d'étanchéité va maintenant être décrit en détail, plus particulièrement en référence au premier joint d'étanchéité 11 de la figure 2.

Le premier joint d'étanchéité 11 est produit en usine, au moyen par exemple d'une machine d'extrusion pour lui conférer le profil recherché.

Il est produit avec par exemple, une largeur L1 au repos de 55 mm et une hauteur H au repos de 18 mm. Il est produit par longueur, par exemple de 50 m.

Le premier joint 11 est enroulé sur lui-même pour former une bobine, approvisionnée sur le chantier de réalisation de la voie ferrée.

Parallèlement, le mastic de fixation est également approvisionné sur le chantier. Il s'agit par exemple du mastic vendu par la société BOSTIK sous la dénomination commerciale « Simson MSR DC » et qui est un mastic appartenant à la famille des polymères modifiés silane (« Silyl modified polymers » ou « silane-modified polymers » en anglais), c'est-à-dire des polymères hybrides à terminaison siliciée.

Une fois que l'état d'avancement de la réalisation de la voie ferrée est tel que la pose du joint d'étanchéité est envisagée, du mastic est étalé dans le premier logement 7, en particulier au fond du logement, c'est-à-dire sur la surface supérieure de l'encapsulation 6, et sur les bords du logement, c'est-à-dire sur la face latérale de la tête de rail 2 et la paroi latérale de la rainure 5.

Une longueur du logement 7 correspondant à la longueur du premier joint 11 à installer est ainsi préparée.

Puis, tout en étant déroulé, le joint d'étanchéité 11 est inséré dans le premier logement 7. Le joint est légèrement pincé transversalement par l'opérateur, par exemple au moyen d'un outil adapté, pour pouvoir en diminuer la largeur et le descendre dans le premier logement 7.

L'âme centrale du joint est appliquée contre le fond du logement pour venir en appui contre celui-ci et chasser latéralement le surplus de mastic sous les ailes du joint 11.

Le joint est ensuite relâché par l'opérateur pour que, par expansion transversale, grâce à l'élasticité des portions en accordéon, le joint 11 vienne en appui d'une part contre le rail 2 et d'autre part contre la paroi de la rainure 5.

La largeur L1 du premier joint étant choisie légèrement supérieure à la largeur du logement 7, le joint 11 est appliqué contre les bords du logement 7 sous l'effet de la force élastique d'expansion causée par la déformation transversale résiduelle du joint.

En variante, le joint est inséré à force dans le logement. Cette variante de réalisation est plus particulièrement adaptée au seconde mode de réalisation de la figure 6.

Il suffit ensuite d'attendre quelques heures pour que le mastic sèche de manière à ce que le joint soit définitivement collé.

Il est à noter que le joint d'étanchéité selon l'invention, déformable élastiquement, permet avantageusement d'absorber les variations de la cote du logement dans lequel il est inséré, variations de cote initiales lors de la réalisation de la voie, ou variations de cote au cours de l'exploitation de la voie ferrée (variations statiques, par exemple dues au tassement de la voie, ou variations dynamiques, par exemple dues au passage des tramways).

Cette élasticité du joint permet notamment d'accepter une amplitude importante de largeur du logement sur toute la longueur du joint.

De plus, cette élasticité du joint d'étanchéité permet une pose aisée dans les passages en courbe de la voie ferrée, tout en garantissant une bonne étanchéité entre le rail et la rainure de réception du rail.

La hauteur H du joint 11 est choisie égale ou légèrement inférieure à la profondeur du premier logement 7 pour absorber les écarts dans la cote de la surface supérieure de l'encapsulation 6 et l'épaisseur de mastic déposé dans le logement, de manière à ce que le joint 11 soit totalement reçu à l'intérieur du logement 7 sans dépasser le niveau du sol 1.

Ce procédé est itéré pour la pose du second joint 12 dans le second logement 8.

L'homme du métier constatera que le joint selon l'invention est particulièrement facile à poser, que l'étanchéification obtenue est de qualité, et permet de protéger le rail et son encapsulation de manière efficace et prolongée dans le temps.

## Revendications

1. Joint d'étanchéité (11, 12, 13) pour voie ferrée, la voie ferrée comportant un logement (7, 8) s'étendant entre une face latérale d'un rail (2) et une paroi latérale d'une rainure (5) réservée dans le sol (1) pour loger ledit rail, ledit joint d'étanchéité (11, 12, 13) étant destiné à être rapporté dans le logement (7, 8) et fixé dans le logement (7, 8) par un mastic (16) adapté, le joint d'étanchéité (11, 12, 13) étant un profilé déformable de manière élastique, pour pouvoir être inséré sous contrainte dans le logement et être appliqué contre la face latérale du rail (2) et la paroi latérale de la rainure (5), **caractérisé en ce que** le joint d'étanchéité présente une section transversale comportant au moins un motif en «V », le motif en « V » étant déformable de manière élastique pour modifier une largeur dudit joint d'étanchéité, la section transversale étant symétrique selon un axe médian (A), le joint d'étanchéité comportant une aile droite (22) et une aile gauche (23), chaque aile comporte un motif en « V », le joint d'étanchéité comportant une âme centrale (21) de part et d'autre de laquelle sont raccordées les ailes droite et gauche (22, 23), l'âme centrale (21) venant en appui d'un fond du logement (7), le motif en « V » étant constitué d'une première paroi (41) à angle et d'une seconde paroi (42) à angle, connectées l'une à l'autre selon une arête (43), une épaisseur de l'arête étant affinée par rapport à une épaisseur des première et seconde parois de manière à autoriser une déformation de manière élastique du motif en « V » par modification d'un angle entre les première et seconde parois (42).

2. Joint d'étanchéité (13) selon la revendication 1, comportant une portion supérieure (220) recordée à une face supérieure de l'âme centrale (221) et s'étendant transversalement de manière à recouvrir le ou chaque motif en « V ».

3. Joint d'étanchéité (11, 12, 13) selon l'une quelconque des revendications précédentes, comportant des extrémités latérales (35, 135, 235, 55, 155, 255) présentant un contour en arc de cercle.

4. Joint d'étanchéité (11, 12, 13) selon l'une quelconque des revendications précédentes, réalisé dans un matériau polymère, de préférence un caoutchouc synthétique.

5. Voie ferrée comportant : un logement (7, 8) s'étendant entre une face latérale d'un rail (2) et une paroi latérale d'une rainure (5) réservée dans le sol (1) pour loger ledit rail ; et un joint d'étanchéité dans ledit logement, **caractérisée en ce que** ledit joint d'étanchéité est un joint d'étanchéité (11, 12, 13) selon l'une quelconque des revendications précédentes, rapporté dans le logement et fixé dans le logement (7, 8) par un mastic (16) adapté.

## Patentansprüche

1. Dichtung (11, 12, 13) für Eisenbahngleise, wobei das Eisenbahngleis eine Aufnahme (7, 8) aufweist, die sich zwischen einer Seitenfläche einer Schiene (2) und einer Seitenwand einer Nut (5) erstreckt, die im Boden (1) zur Aufnahme des Gleiskörpers reserviert ist. Die Dichtung (11, 12, 13) ist dazu bestimmt, in die Aufnahme (7, 8) eingesetzt und in der Aufnahme (7, 8) durch einen geeigneten Kitt (16) befestigt zu werden, wobei die Dichtung (11, 12, 13) ein elastisch verformbares Profil ist, um unter Spannung in die Aufnahme eingeführt und gegen die Seitenfläche der Schiene (2) und die Seitenwand der Nut (5) gedrückt werden zu können, **dadurch gekennzeichnet, dass** die Dichtung einen Querschnitt mit mindestens einem "V"-Muster aufweist, wobei das "V"-Muster elastisch verformbar ist, um eine Breite der Dichtung zu ändern. Der Querschnitt ist symmetrisch entlang einer Mittelachse (A), wobei die Dichtung einen rechten Flügel (22) und einen linken Flügel (23) aufweist, wobei jeder Flügel ein "V"-Muster aufweist, wobei die Dichtung einen zentralen Steg (21) umfasst, auf dessen beiden Seiten der rechte und der linke Flügel (22, 23) verbunden sind, wobei der zentrale Steg (21) an einem Boden der Aufnahme (7) anliegt, wobei das "V"-Muster aus einer ersten abgewinkelten Wand (41) und einer zweiten abgewinkelten Wand (42) besteht, die entlang einer Kante (43) miteinander verbunden sind, wobei eine Dicke der Kante dünner ist als die Dicke der ersten und der zweiten Wand, um eine elastische Verformung des "V"-Musters durch Änderung eines Winkels zwischen der ersten und zweiten Wand (42) zu ermöglichen.

2. Dichtung (13) nach Anspruch 1, mit einem oberen Abschnitt (220), der mit einer Oberseite des zentralen Stegs (221) verbunden ist und sich quer erstreckt, um das oder jedes "V"-Muster zu überdecken.

3. Dichtung (11, 12, 13) nach einem der vorhergehenden Ansprüche, mit seitlichen Enden (35, 135, 235, 55, 155, 255), die eine kreisbogenförmige Kontur aufweisen.

4. Dichtung (11, 12, 13) nach einem der vorhergehenden Ansprüche, hergestellt aus einem polymeren Material, vorzugsweise synthetischem Kautschuk.

5. Eisenbahngleis mit einer Aufnahme (7, 8), das sich zwischen einer Seitenfläche einer Schiene (2) und einer Seitenwand einer Nut (5) erstreckt, die im Boden (1) zur Aufnahme der Schiene reserviert ist; und einer Dichtung in der Aufnahme, **dadurch gekennzeichnet, dass** die Dichtung eine Dichtung (11, 12, 13) nach einem der vorhergehenden Ansprüche ist, die in die Aufnahme eingesetzt und in der Aufnahme (7, 8) durch einen geeigneten Kitt (16) befestigt wird.

## Claims

1. A sealing device (11, 12, 13) for a railway, the railway including a housing (7, 8) extending between a side face of a rail (2) and a side wall of a slot (5) reserved in the ground (1) for housing said rail, said sealing device (11, 12, 13) is intended to be inserted into the housing (7, 8) and fixed in the housing (7, 8) by a suitable putty (16), the sealing device (11, 12, 13) being a resiliently deformable profile, so as to be inserted under stress in the housing and pressed against the side face of the rail (2) and the side wall of the slot (5), **characterized in that** the sealing device has a cross-section including at least one "V" pattern, the "V" pattern being deformable resiliently to modify a width of said sealing device, the cross-section being symmetrical along a median axis (A), the sealing device including a right wing ( 22) and a left wing (23), each wing including a "V" pattern, the sealing device including a central core (21) on either side of which the right and left wings (22, 23) are connected, the central core (21) bearing on a bottom of the housing (7), the "V" pattern being made up of a first angled wall (41) and a second angled wall (42), connected to one another with a rim (43), a thickness of the rim being refined relative to a thickness of the first and second angled walls so as to allow a resilient deformation of the "V" pattern by modifying an angle between the first and second angled walls (42).

2. The sealing device (13) according to claim 1, including an upper portion (220) connected to an upper face of the central core (221) and extending transversely so as to cover the or each "V" pattern.

3. The sealing device (11, 12, 13) according to any one of the previous claims, including side ends (35, 135, 235, 55, 155, 255) having an arc of circle-shaped contour.

4. The sealing device (11, 12, 13) according to any one of the previous claims, made from a polymer material, preferably a synthetic rubber.

5. A railway, including: a housing (7, 8) extending between a side face of a rail (2) and a side wall of a slot (5) reserved in the ground (1) to house the rail; and a sealing device in said housing, **characterized in that** the sealing device is a sealing device (11, 12, 13) according to any one of the previous claims, inserted in the housing and fixed in the housing (7, 8) by a suitable putty (16).
